# EUROPEAN PATENT APPLICATION

(11) **EP 4 843 664 A2**
(43) Date of publication of application: **25.11.2026**
(21) Application number: 25226327.2
(22) Date of filing: 22.12.2025
(51) Int. Cl.: B01J 13/04, B01J 13/22

(54) **METHOD FOR PRODUCING HYDROPHOBIC PARTICLES AND HYDROPHOBIC PARTICLES**

(30) Priority: 20.05.2025 JP 2025084130
(71) Applicant: FUJIFILM Business Innovation Corp., Minato-ku Tokyo (JP)
(72) Inventor: OKI, Masahiro, Minamiashigara-shi, Kanagawa (JP); MATOBA, Shota, Minamiashigara-shi, Kanagawa (JP); YOSHIKAWA, Hideaki, Minamiashigara-shi, Kanagawa (JP); IWANAGA, Takeshi, Minamiashigara-shi, Kanagawa (JP); ERI, Yoshifumi, Minamiashigara-shi, Kanagawa (JP); IWADATE, Yuko, Minamiashigara-shi, Kanagawa (JP); TAKEUCHI, Sakae, Minamiashigara-shi, Kanagawa (JP)
(74) Representative: Becker Kurig & Partner Patentanwälte mbB

(57) **Abstract**

A method for producing hydrophobic particles includes: mixing core particles with basic polysaccharides and/or polyamine in an aqueous medium, and forming an intermediate layer by causing the basic polysaccharides and/or the polyamine to adhere to a surface of the core particles to obtain intermediate particles including the core particles and the intermediate layer; obtaining an aqueous dispersion containing the intermediate particles and a fatty acid alkali metal salt; and mixing the aqueous dispersion with an aqueous solution of an inorganic salt of a metal other than an alkali metal, causing metal soap particles to precipitate on a surface of the intermediate particles to form a metal soap layer, and obtaining hydrophobic particles including the core particles, the intermediate layer, and the metal soap layer.

## Description

### BACKGROUND OF THE INVENTION

### (i) Field of the Invention

The present disclosure relates to a method for producing hydrophobic particles and hydrophobic particles.

### (ii) Description of Related Art

JP6729546B discloses metal soap containing metal soap particles having 6 to 22 carbon atoms in a fatty acid and an inorganic crystal nucleating agent having an average particle diameter of 0.01 µm to 20 µm incorporated into the metal soap particles, in which a 50% cumulative diameter of the metal soap particles based on a volume is 1.0 µm to 30.0 µm, and an internal incorporation rate A is 30% or more.

In addition, JP6729546B discloses a method for producing the metal soap by reacting a fatty acid alkali metal salt obtained from a fatty acid having 6 to 22 carbon atoms with an inorganic metal salt by a double decomposition method, the method including a step of preparing a dispersion by dispersing an inorganic crystal nucleating agent having an average particle diameter of 0.01 µm to 20 µm in an aqueous solution of a fatty acid alkali metal salt in an amount of 0.1% by mass to 20% by mass with respect to a total amount of the fatty acid and the inorganic crystal nucleating agent, and a step of mixing the dispersion with an aqueous solution of the inorganic metal salt to perform a reaction.

JP7495244B discloses fatty acid calcium salt particles having 12 to 22 carbon atoms, in which the fatty acid calcium salt particles have a median diameter of 4.0 µm to 15.0 µm, a particle size summary value of A ≤ 2.0, and an average thickness of 350 nm to 800 nm.

In addition, JP7495244B discloses a method for producing the fatty acid calcium salt particles by dropping a calcium salt-containing aqueous solution into an aqueous solution containing a fatty acid alkali compound salt, and using a polyalkylene glycol-based ether as a stabilizer.

JP4967344B discloses a metal soap for a makeup cosmetic that is a metal soap consisting of a fatty acid magnesium soap, a fatty acid calcium, or a fatty acid zinc having 6 to 24 carbon atoms and obtained by a double decomposition method, in which a pH of a 2% by mass aqueous dispersion of the metal soap is 6 to less than 7.

In addition, JP4967344B discloses a method for producing the metal soap by the double decomposition method, the metal soap consisting of a fatty acid magnesium, a fatty acid calcium, or a fatty acid zinc, and a pH of a 2% by mass aqueous dispersion being 6 to less than 7, the method including reacting 1 mole of fatty acid having 6 to 24 carbon atoms with 0.9 moles to less than 1 mole of monovalent basic compound to obtain a basic compound salt of the fatty acid, and reacting the basic compound salt of the fatty acid with a magnesium salt, a calcium salt, or a zinc salt in an aqueous medium.

JP2024-141017A discloses cellulose particles including mother particles containing cellulose as a main component, a first coating layer containing a polyvalent metal salt of a resin having an acid functional group, and a second coating layer containing at least one hydrophobic compound selected from a fatty acid, a polyvalent metal salt of the fatty acid, an amino acid compound, or a polyvalent metal salt of the amino acid compound.

JP2024-144020A discloses cellulose particles including mother particles containing cellulose as a main component and a coating layer containing at least one coating material selected from a fatty acid, a fatty acid metal salt, or an amino acid compound, in which a coverage ratio of the coating layer with respect to the mother particles is 60% or more and 100% or less.

JP2024-144055A discloses cellulose particles including a mother particle containing cellulose as a main component, a first coating layer containing at least one polysaccharide selected from basic polysaccharides and a salt of the basic polysaccharide, and a second coating layer containing at least one hydrophobic compound selected from a fatty acid, a fatty acid metal salt, an acylated amino acid, and an acylated amino acid salt.

### SUMMARY OF THE INVENTION

An object of the present disclosure is to provide a production method for obtaining hydrophobic particles having excellent water repellency.

Specific means for achieving the above-described object include the following aspects.
<1> According to a first aspect of the present disclosure, there is provided a method for producing hydrophobic particles, including: mixing core particles with basic polysaccharides and/or polyamine in an aqueous medium, and forming an intermediate layer by causing the basic polysaccharides and/or the polyamine to adhere to a surface of the core particles to obtain intermediate particles including the core particles and the intermediate layer; obtaining an aqueous dispersion containing the intermediate particles and a fatty acid alkali metal salt; and mixing the aqueous dispersion with an aqueous solution of an inorganic salt of a metal other than an alkali metal, causing metal soap particles to precipitate on a surface of the intermediate particles to form a metal soap layer, and obtaining hydrophobic particles including the core particles, the intermediate layer, and the metal soap layer.
<2> According to a second aspect of the present disclosure, there is provided the method for producing hydrophobic particles according to <1>, in which in a case where a volume-based median diameter of the core particles is set as A µm and a volume-based median diameter of the metal soap particles is set as B µm, a value of B/A may be 0.005 or more and less than 0.08.
<3> According to a third aspect of the present disclosure, there is provided the method for producing hydrophobic particles according to <1> or <2>, in which a volume-based median diameter of the metal soap particles may be 0.1 µm or more and less than 1 µm.
<4> According to a fourth aspect of the present disclosure, there is provided the method for producing hydrophobic particles according to any one of <1> to <3>, in which the core particles may include at least one selected from the group consisting of cellulose particles, cellulose acetate particles, and fatty acid polyester particles.
<5> According to a fifth aspect of the present disclosure, there is provided the method for producing hydrophobic particles according to any one of <1> to <4>, in which the basic polysaccharides may include water-soluble chitosan.
<6> According to a sixth aspect of the present disclosure, there is provided the method for producing hydrophobic particles according to any one of <1> to <5>, in which the polyamine may include polyethyleneimine and/or polyallylamine.
<7> According to a seventh aspect of the present disclosure, there is provided the method for producing hydrophobic particles according to any one of <1> to <6>, in which in obtaining the intermediate particles, a total amount of the basic polysaccharides and the polyamine may be 0.1% by mass or more and 10% by mass or less with respect to an amount of the core particles.
<8> According to an eighth aspect of the present disclosure, there is provided the method for producing hydrophobic particles according to any one of <1> to <7>, in which a number of carbon atoms of a fatty acid in the fatty acid alkali metal salt may be 12 or more and 22 or less.
<9> According to a ninth aspect of the present disclosure, there is provided the method for producing hydrophobic particles according to any one of <1> to <8>, in which in obtaining the aqueous dispersion, an amount of a fatty acid in the fatty acid alkali metal salt may be 1% by mass or more and 20% by mass or less with respect to an amount of the core particles.
<10> According to a tenth aspect of the present disclosure, there is provided the method for producing hydrophobic particles according to any one of <1> to <9>, in which the metal other than the alkali metal may include at least one selected from the group consisting of calcium, zinc, and magnesium.
<11> According to an eleventh aspect of the present disclosure, there is provided hydrophobic particles including core particles, an intermediate layer, and a metal soap layer, in which the intermediate layer contains basic polysaccharides and/or polyamine, the metal soap layer contains metal soap particles, and in a case where a volume-based median diameter of the core particles is set as A µm and a volume-based median diameter of the metal soap particles is set as B µm, a value of B/A is 0.005 or more and less than 0.08.
<12> According to a twelfth aspect of the present disclosure, there is provided hydrophobic particles including core particles, an intermediate layer, and a metal soap layer, in which the intermediate layer contains basic polysaccharides and/or polyamine, the metal soap layer contains metal soap particles, and a volume-based median diameter of the metal soap particles is 0.1 µm or more and less than 1 µm.

According to <1>, <4>, <5>, <6>, <8>, or <10>, hydrophobic particles having excellent water repellency can be obtained as compared with a production method in which the intermediate layer is not formed.

According to <2>, hydrophobic particles having excellent water repellency can be obtained as compared with a production method in which the value of B/A is 0.08 or more.

According to <3>, hydrophobic particles having excellent water repellency can be obtained as compared with a production method in which the volume-based median diameter of the metal soap particles is less than 0.1 µm or 1 µm or more.

According to <7>, hydrophobic particles having excellent water repellency can be obtained as compared with a production method in which the total amount of the basic polysaccharides and the polyamine is less than 0.1% by mass or more than 10% by mass with respect to the amount of the core particles.

According to <9>, hydrophobic particles having excellent water repellency can be obtained as compared with a production method in which the amount of the fatty acid in the fatty acid alkali metal salt is less than 1% by mass or more than 20% by mass with respect to the amount of the core particles.

The hydrophobic particles of <11> are more excellent in water repellency as compared with hydrophobic particles in which the value of B/A is 0.08 or more.

The hydrophobic particles of <12> are more excellent in water repellency as compared with hydrophobic particles in which the volume-based median diameter of the metal soap particles is less than 0.1 µm or 1 µm or more.

### DETAILED DESCRIPTION OF THE INVENTION

Hereinafter, exemplary embodiments of the present disclosure will be described. The following descriptions and examples merely illustrate the exemplary embodiments, and do not limit the scope of the exemplary embodiments.

In the present disclosure, "A and/or B" is synonymous with "at least one of A or B". That is, "A and/or B" represents that A alone may be used, B alone may be used, or a combination of A and B may be used.

In the present disclosure, a numerical range described by using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, a term "step" includes not only an independent step but a step that is not clearly distinguished from other steps as long as the purpose of the step is achieved.

In the present disclosure, each component may include a plurality of corresponding substances. In a case where the amount of each component in a composition is mentioned in the present disclosure, and there are a plurality of substances corresponding to each component in the composition, unless otherwise specified, the amount of each component means the total amount of the plurality of the substances present in the composition.

In the present disclosure, each component may include a plurality of corresponding particles. In a case where there are a plurality of kinds of particles corresponding to each component in a composition, unless otherwise specified, a particle diameter of each component means a value for a mixture of the plurality of kinds of the particles present in the composition.

### <Method for Producing Hydrophobic Particles>

The production method of the present disclosure is a method for producing hydrophobic particles having core particles, an intermediate layer coating the core particles, and a metal soap layer coating the intermediate layer.

The production method according to the present disclosure includes
Step (1) of mixing core particles with basic polysaccharides and/or a polyamine in an aqueous medium, and forming an intermediate layer by causing the basic polysaccharides and/or the polyamine to adhere to a surface of the core particles to obtain intermediate particles including the core particles and the intermediate layer,
Step (2) of obtaining an aqueous dispersion containing the intermediate particles and a fatty acid alkali metal salt, and
Step (3) of mixing the aqueous dispersion with an aqueous solution of an inorganic salt of a metal other than an alkali metal and causing metal soap particles to precipitate on a surface of the intermediate particles to form a metal soap layer, thereby obtaining hydrophobic particles including the core particles, the intermediate layer, and the metal soap layer.

According to the production method of the present disclosure, hydrophobic particles, which have excellent water repellency as compared with a production method in which an intermediate layer containing basic polysaccharides and/or a polyamine is not formed, can be obtained. The intermediate layer containing basic polysaccharides and/or a polyamine is presumed to contribute to stability of the metal soap layer and make water repellency of the hydrophobic particles excellent. The water repellency of the hydrophobic particles in which the intermediate layer containing basic polysaccharides and/or a polyamine is not present between the core particles and the metal soap layer is presumed to be poor because a structure of the metal soap layer is likely to collapse.

Hereinafter, each step and material of the production method of the present disclosure will be described in detail.

### [Step (1)]

Step (1) is a step of mixing core particles with basic polysaccharides and/or polyamine in an aqueous medium and causing the basic polysaccharides and/or the polyamine to adhere to a surface of the core particles to form an intermediate layer. By Step (1), intermediate particles including core particles and the intermediate layer are obtained.

### - Core Particles -

The core particles may be organic particles or inorganic particles. Examples of the organic particles include various polymer particles. Examples of the inorganic particles include particles of silica, alumina, titania, zinc oxide, calcium oxide, boron nitride, talc, mica, synthetic mica, and sericite.

From the viewpoint of being less likely to remain in the environment, the core particles are preferably, for example, biodegradable polymer particles. Examples of the biodegradable polymer particles include at least one selected from the group consisting of cellulose particles, cellulose acetate particles, and fatty acid polyester particles.

The cellulose particles are preferably, for example, particles consisting of cellulose having an acetyl group substitution degree of less than 0.4. The cellulose acetate particles are preferably, for example, particles consisting of cellulose acetate having an acetyl group substitution degree of 1.1 or more and 2.4 or less.

In a case where an application of the hydrophobic particles of the present disclosure is a cosmetic additive, a volume-based median diameter of the core particles may be, for example, 0.1 µm or more and 100 µm or less, 1 µm or more and 80 µm or less, 2 µm or more and 50 µm or less, or 5 µm or more and 20 µm or less.

The volume-based median diameter of the core particles is measured with a laser diffraction scattering-type particle diameter measuring device.

### - Basic Polysaccharides -

The basic polysaccharides include salts of basic polysaccharides.

The basic polysaccharide is a polysaccharide including a primary amine or a secondary amine as a basic functional group. Examples of the basic functional group include an amino group and an acetamide group.

Examples of the basic polysaccharides include chitosan, chitin, aminated cellulose, and hyaluronic acid.

Examples of a salt of the basic polysaccharides include a lactate, a citrate, an acetate, a butyrate, a hydrochloride, and a sodium salt of the basic polysaccharides.

From the viewpoint of water solubility and the viewpoint of stabilizing the metal soap layer, for example, water-soluble chitosan is preferable as the basic polysaccharides. Examples of the water-soluble chitosan include a chitosan salt, and specific examples thereof include a chitosan lactate, a chitosan citrate, a chitosan acetate, a chitosan butyrate, and a chitosan hydrochloride.

Chitosan is a deacetylated product of chitin. From the viewpoint of stabilizing the metal soap layer, the degree of deacetylation of chitosan is, for example, preferably 70% or more and 100% or less.

### - Polyamine -

The polyamine is a general term for an aliphatic hydrocarbon having two or more primary amino groups.

Examples of the polyamine include polyalkyleneimine, polyallylamine, polyvinylamine, and polylysine.

As the polyamine, from the viewpoint of water solubility and the viewpoint of stabilizing the metal soap layer, for example, polyethyleneimine and/or polyallylamine is preferable.

In Step (1), from the viewpoint of forming an appropriate amount of the intermediate layer and ensuring the stability of the metal soap layer, the total amount of the basic polysaccharides and the polyamine is, for example, preferably 0.05% by mass or more and 15% by mass or less, more preferably 0.1% by mass or more and 10% by mass or less, and still more preferably 0.5% by mass or more and 5% by mass or less with respect to the amount of the core particles.

### - Aqueous Medium -

As the aqueous medium, water is appropriate. A dispersant of the core particles may be added to water.

Examples of an exemplary embodiment of Step (1) include an aspect in which basic polysaccharides and/or polyamine is added to an aqueous dispersion of core particles and agitated. Here, from the viewpoint of dispersion stability of the core particles and formation efficiency of the intermediate particles, the concentration of the core particles in the aqueous dispersion of the core particles is, for example, preferably 1% by mass or more and 50% by mass or less, more preferably 2% by mass or more and 30% by mass or less, and even more preferably 5% by mass or more and 20% by mass or less.

### [Step (2)]

Step (2) is a step of obtaining an aqueous dispersion containing the intermediate particles and the fatty acid alkali metal salt.

Sodium and/or potassium is appropriate as an alkali metal configuring the fatty acid alkali metal salt, and from the viewpoint of low cost, for example, sodium is preferable.

A fatty acid configuring the fatty acid alkali metal salt may be a saturated fatty acid or an unsaturated fatty acid, and from the viewpoint of temporal stability of the metal soap layer, for example, a saturated fatty acid is preferable.

From the viewpoint of the stability of the metal soap layer and the water repellency of the hydrophobic particles, the number of carbon atoms in the fatty acid configuring the fatty acid alkali metal salt is, for example, preferably 10 or more and 24 or less, more preferably 12 or more and 22 or less, and still more preferably 14 or more and 20 or less.

Examples of the fatty acid configuring the fatty acid alkali metal salt include caprylic acid (10), lauric acid (12), myristic acid (14), palmitic acid (16), stearic acid (18), oleic acid (18), linoleic acid (18), linolenic acid (18), arachidic acid (20), arachidonic acid (20), behenic acid (22), erucic acid (22), lignoceric acid (24), and nervonic acid (24). The number in parentheses is the number of carbon atoms.

Examples of an exemplary embodiment of Step (2) include an aspect in which an aqueous dispersion in which the intermediate particles are dispersed is heated, a fatty acid is added thereto to be dissolved, and an aqueous solution of an alkali metal hydroxide is added thereto. The fatty acid and the alkali metal hydroxide react with each other to form a fatty acid alkali metal salt.

Here, the aqueous dispersion resulting from Step (1) is appropriate as the aqueous dispersion in which the intermediate particles are dispersed.

The temperature that the aqueous dispersion reaches by heating is, for example, preferably equal to or higher than a melting point of the fatty acid and equal to or lower than a temperature at which the fatty acid is not decomposed. The temperature is, for example, 50°C or higher and 100°C or lower.

The concentration of the aqueous solution of the alkali metal hydroxide is, for example, preferably 5% by mass or more and 50% by mass or less, more preferably 8% by mass or more and 40% by mass or less, and still more preferably 10% by mass or more and 30% by mass or less.

The amount of the fatty acid in Step (2) is, for example, preferably 1% by mass or more and 20% by mass or less, more preferably 2% by mass or more and 18% by mass or less, and still more preferably 5% by mass or more and 15% by mass or less with respect to the amount of the core particles.

### [Step (3)]

Step (3) is a step of mixing the aqueous dispersion resulting from Step (2) with an aqueous solution of an inorganic salt of a metal other than an alkali metal, and causing metal soap particles to precipitate on a surface of the intermediate particles to form a metal soap layer. That is, Step (3) is a step of causing the metal soap particles to precipitate by the double decomposition method.

Examples of the metal other than the alkali metal include magnesium, calcium, barium, aluminum, and zinc.

Examples of the inorganic salt of the metal include a chloride, a sulfate, a carbonate, a nitrate, and a phosphate of the metals.

From the viewpoint of the stability of the metal soap layer and the water repellency of the hydrophobic particles, at least one selected from the group consisting of calcium, zinc, and magnesium is preferable as the metal other than the alkali metal.

As the inorganic salt of a metal other than the alkali metal, from the viewpoint of easy solubility in water, for example, calcium chloride, zinc chloride, or magnesium chloride is preferable.

Therefore, the metal soap constituting the metal soap particles is preferably at least one selected from the group consisting of fatty acid calcium, fatty acid zinc, and fatty acid magnesium. Here, as the fatty acid, for example, a fatty acid having 10 or more and 24 or less carbon atoms is preferable, a fatty acid having 12 or more and 22 or less carbon atoms is more preferable, and a fatty acid having 14 or more and 20 or less carbon atoms is still more preferable.

From the viewpoint of the stability of the metal soap layer and the water repellency of the hydrophobic particles, the volume-based median diameter of the metal soap particles forming the metal soap layer is, for example, preferably less than 1 µm, more preferably less than 0.8 µm, still more preferably less than 0.6 µm, still more preferably less than 0.5 µm, and still more preferably less than 0.4 µm.

From the viewpoint of the stability of the metal soap layer and the water repellency of the hydrophobic particles, the volume-based median diameter of the metal soap particles forming the metal soap layer is, for example, preferably 0.1 µm or more, more preferably 0.2 µm or more, and still more preferably 0.3 µm or more.

The volume-based median diameter of the metal soap particles is measured by desorbing and recovering the metal soap particles from the hydrophobic particles and measuring the particles with a laser diffraction scattering-type particle diameter measuring device.

In a case where the volume-based median diameter of the core particles is set as A µm and the volume-based median diameter of the metal soap particles is set as B µm, from the viewpoint of the stability of the metal soap layer and the water repellency of the hydrophobic particles, a value of B/A is, for example, preferably less than 0.08, more preferably less than 0.07, still more preferably less than 0.06, still more preferably less than 0.05, and still more preferably less than 0.04.

From the viewpoint of the stability of the metal soap layer and the water repellency of the hydrophobic particles, the value of B/A is, for example, preferably 0.005 or more, more preferably 0.01 or more, and still more preferably 0.02 or more.

Examples of an exemplary embodiment of Step (3) include an aspect in which an aqueous inorganic metal salt solution is dropped to the aqueous dispersion resulting from Step (2). The concentration of the aqueous inorganic metal salt solution is, for example, preferably 5% by mass or more and 50% by mass or less, more preferably 8% by mass or more and 40% by mass or less, and still more preferably 10% by mass or more and 30% by mass or less.

The particle diameter of the metal soap particles can be controlled by the concentration of the aqueous inorganic metal salt solution, a time taken for dropping the aqueous inorganic metal salt solution, and the like.

The hydrophobic particles obtained in Step (3) are washed and dried to obtain hydrophobic particles.

Desired aspects of the hydrophobic particles obtained by the production method of the present disclosure will be described in the following item <Hydrophobic Particles>.

### <Hydrophobic Particles>

The hydrophobic particles of the present disclosure are hydrophobic particles including core particles, a metal soap layer as an outermost layer, and an intermediate layer disposed between the core particles and the metal soap layer, in which the intermediate layer contains basic polysaccharides and/or polyamine, and the metal soap layer contains metal soap particles.

The core particles, the intermediate layer, the basic polysaccharides, the polyamine, the metal soap layer, and the metal soap particles configuring the hydrophobic particles of the present disclosure have the same meaning as each element described above regarding the production method, and the desired aspects thereof are also the same.

In a first aspect of the hydrophobic particles according to the present disclosure, in a case where a volume-based median diameter of the core particles is set as A µm and a volume-based median diameter of the metal soap particles is set as B µm, a value of B/A is 0.005 or more and less than 0.08.

The hydrophobic particles according to the first aspect are more excellent in water repellency as compared with hydrophobic particles having a value of B/A of 0.08 or more.

In the first aspect, from the viewpoint of excellent water repellency, the value of B/A is, for example, preferably less than 0.07, more preferably less than 0.06, still more preferably less than 0.05, and even still more preferably less than 0.04.

In the first aspect, from the viewpoint of excellent water repellency, the value of B/A is, for example, 0.005 or more, preferably 0.01 or more, and more preferably 0.02 or more.

In the first aspect, from the viewpoint of excellent water repellency, the volume-based median diameter of the metal soap particles is, for example, preferably less than 1 µm, more preferably less than 0.8 µm, still more preferably less than 0.6 µm, still more preferably less than 0.5 µm, and still more preferably less than 0.4 µm.

In the first aspect, from the viewpoint of excellent water repellency, the volume-based median diameter of the metal soap particles is, for example, preferably 0.1 µm or more, more preferably 0.2 µm or more, and still more preferably 0.3 µm or more.

In a second aspect of the hydrophobic particles according to the present disclosure, the volume-based median diameter of the metal soap particles is 0.1 µm or more and less than 1 µm.

The hydrophobic particles according to the second aspect are more excellent in water repellency as compared with hydrophobic particles in which the volume-based median diameter of the metal soap particles is less than 0.1 µm or 1 µm or more.

In the second aspect, from the viewpoint of excellent water repellency, the volume-based median diameter of the metal soap particles is, for example, preferably less than 0.8 µm, more preferably less than 0.6 µm, still more preferably less than 0.5 µm, and still more preferably less than 0.4 µm.

In the second aspect, from the viewpoint of excellent water repellency, the volume-based median diameter of the metal soap particles is, for example, preferably 0.2 µm or more and more preferably 0.3 µm or more.

In the second aspect, in a case where the volume-based median diameter of the core particles is set as A µm and the volume-based median diameter of the metal soap particles is set as B µm, from the viewpoint of excellent water repellency, a value of B/A is, for example, preferably less than 0.08, more preferably less than 0.07, still more preferably less than 0.06, still more preferably less than 0.05, and still more preferably less than 0.04.

In the second aspect, from the viewpoint of excellent water repellency, the value of B/A is, for example, preferably 0.005 or more, more preferably 0.01 or more, and still more preferably 0.02 or more.

In the first aspect and the second aspect, from the viewpoint of the stability of the metal soap layer and the water repellency of the hydrophobic particles, the metal soap configuring the metal soap particles preferably contains, for example, at least one selected from the group consisting of fatty acid calcium, fatty acid zinc, and fatty acid magnesium.

In the first aspect and the second aspect, from the viewpoint of the stability of the metal soap layer and the water repellency of the hydrophobic particles, the fatty acid of the metal soap configuring the metal soap particles is, for example, preferably a fatty acid having 10 or more and 24 or less carbon atoms, more preferably a fatty acid having 12 or more and 22 or less carbon atoms, and still more preferably a fatty acid having 14 or more and 20 or less carbon atoms.

In the first aspect and the second aspect, from the viewpoint of the stability of the metal soap layer and the water repellency of the hydrophobic particles, the amount of the fatty acid contained in the metal soap layer is, for example, preferably 1% by mass or more and 20% by mass or less, more preferably 2% by mass or more and 18% by mass or less, and still more preferably 5% by mass or more and 15% by mass or less with respect to the amount of the core particles.

In the first aspect and the second aspect, from the viewpoint of stabilizing the metal soap layer, the total amount of the basic polysaccharides and the polyamine contained in the intermediate layer is, for example, preferably 0.05% by mass or more and 15% by mass or less, more preferably 0.1% by mass or more and 10% by mass or less, and still more preferably 0.5% by mass or more and 5% by mass or less with respect to the amount of the core particles.

Examples of applications of the hydrophobic particles of the present disclosure include a cosmetic additive, an abrasive, a scrubbing agent, light diffusing particles, a refractive index control agent, a resin reinforcing agent, an antiblocking agent, and toner particles.

As the application of the hydrophobic particles of the present disclosure, for example, the cosmetic additive is preferable. Examples of cosmetics to which the hydrophobic particles of the present disclosure are added include base makeup cosmetics (for example, a makeup base, a concealer, a foundation, a face powder, and the like); makeup cosmetics (for example, a lipstick, a gloss, a lip liner, a blush, an eyeshadow, an eyeliner, a mascara, an eyebrow, and the like); skin care cosmetics (for example, a facial cleanser, a cleansing, a lotion, an emulsion, an essence, a pack, a face mask, and the like); and nail care cosmetics.

### Examples

Hereinafter, the exemplary embodiments of the present invention will be described in detail based on examples. However, the exemplary embodiments of the present invention are not limited to the examples.

In the following description, unless otherwise specified, "parts" and "%" are based on a mass.

### <Production of Hydrophobic Particles>

### [Example 1]

The amount of each liquid composition used in Step (1) to Step (3) is an amount corresponding to "% by mass with respect to the amount of core particles" shown in Table 1.

### - Step (1) -

A slurry having a concentration of 15% by mass, in which cellulose particles having a volume-based median diameter of 10 µm are dispersed in water, is prepared.

An aqueous chitosan lactate solution having a concentration of 2% by mass (hereinafter, referred to as an "aqueous chitosan solution") is prepared.

While agitating the cellulose particle slurry, the aqueous chitosan solution is gradually added thereto, and the resultant mixture is continuously agitated for 8 hours.

### - Step (2) -

The aqueous dispersion obtained in Step (1) is heated to a liquid temperature of 80°C while being agitated. Stearic acid is added to the aqueous dispersion while maintaining the liquid temperature, and the resultant mixture is continuously agitated for 10 minutes. Next, sodium hydroxide having a concentration of 30% by mass is gradually added to the mixture, and the mixture is continuously agitated for 10 minutes.

### - Step (3) -

The liquid temperature is adjusted to 80°C while agitating the aqueous dispersion obtained in Step (2). An aqueous calcium chloride solution having a concentration of 5% by mass is dropped to the aqueous dispersion for 10 minutes, and the resultant mixture is continuously agitated for 10 minutes.

While continuing the agitation, tap water is added to the mixture, and the liquid temperature is cooled to 50°C. The particles are filtered, washed with ion exchanged water, and dried. In this way, hydrophobic particles are obtained.

### [Comparative Examples 1 and 2]

Hydrophobic particles are produced in the same manner as in Example 1 except that the cellulose particle slurry is used in Step (2) without performing Step (1).

In Comparative Example 2, a dropping time and an agitation time in Step (3) are set to be longer than a dropping time and an agitation time in Comparative Example 1, and the metal soap particles are grown.

### [Examples 2 to 6]

Hydrophobic particles are produced in the same manner as in Example 1 except that the dropping time and the agitation time in Step (3) are increased or decreased. The longer the dropping time and the agitation time in Step (3), the larger the particle diameter of the metal soap particles. In Examples 3 and 4, the particle diameter of the cellulose particles is changed.

### [Examples 7 to 10]

Hydrophobic particles are produced in the same manner as in Example 1 except that the amount of the aqueous chitosan solution used in Step (1) is increased or decreased.

### [Examples 11 to 14]

Hydrophobic particles are produced in the same manner as in Example 1 except that the amount of the stearic acid used in Step (2) is increased or decreased.

### [Examples 15 to 17]

Hydrophobic particles are produced in the same manner as in Example 1 except that the type of the fatty acid used in Step (2) is changed.

### [Examples 18 and 19]

Hydrophobic particles are produced in the same manner as in Example 1 except that the type of the inorganic metal salt used in Step (3) is changed.

### [Examples 20 and 21]

Hydrophobic particles are produced in the same manner as in Example 1 except that the type of the core particles used in Step (1) is changed.

### [Examples 22 and 23]

Hydrophobic particles are produced in the same manner as in Example 1 except that the type of the material of the intermediate layer used in Step (1) is changed.

In Example 22, polyethyleneimine (PEI) is used.

In Example 23, polyallylamine (PAA) is used.

### <Evaluation of Hydrophobic Particles>

### [Volume-Based Median Diameter A of Core Particles]

The core particles subjected to Step (1) are used as a sample, and a volume-based median diameter is measured with a laser diffraction scattering-type particle diameter measuring device.

### [Volume-Based Median Diameter B of Metal Soap Particles]

The metal soap particles are desorbed from the hydrophobic particles and recovered, and the volume-based median diameter is measured with a laser diffraction scattering-type particle diameter measuring device.

### [Water Repellency]

The following experiments are carried out in an environment of a temperature of 25°C.

EDTA-2Na (disodium ethylenediaminetetraacetate) is dissolved in ion exchanged water to prepare an aqueous EDTA solution having a concentration of 2% by mass.

50 mL of aqueous EDTA solution is put into a 100 mL glass sample bottle, and 5 g of particles is added to the aqueous EDTA solution. The sample bottle is gently shaken with a shaker for 1 hour. Next, the sample is left to stand still, and particles floating in the aqueous EDTA solution in the sample bottle are recovered. The recovered particles are spread on filter paper and dried for 24 hours, and then the particles are precisely weighed after drying. Precisely weighed mass/5 g × 100 (% by mass) is calculated and classified as follows. The results are shown in Table 1. G5 has the highest water repellency, and G1 has the lowest water repellency.
G5: more than 90% by mass
G4: more than 70% by mass and 90% by mass or less
G3: more than 50% by mass and 70% by mass or less
G2: more than 30% by mass and 50% by mass or less
G1: 30% by mass or less

**[Table 1]**

| | Core particles | | Material of intermediate layer | | | | Fatty acid | | | Inorganic metal salt | Metal soap particles | B/A | Water repellency |
|---|---|---|---|---|---|---|---|---|---|---|---|---|---|
| | Molecular species | Particle diameter A | Aqueous chitosan | PEI | PAA | Total | Molecular species | Number of carbon atoms | % by mass with respect to amount of core particles | Metal species | Particle diameter B | | |
| | | µm | % by mass with respect to amount of core particles | | | | | | | | µm | µm/µm | |
| Comparative Example 1 | Cellulose | 10 | 0 | 0 | 0 | 0 | Stearic acid | 18 | 10 | Ca | 0.35 | 0.035 | G1 |
| Comparative Example 2 | Cellulose | 10 | 0 | 0 | 0 | 0 | Stearic acid | 18 | 10 | Ca | 0.82 | 0.082 | G1 |
| Example 2 | Cellulose | 10 | 1 | 0 | 0 | 1 | Stearic acid | 18 | 10 | Ca | 0.08 | 0.008 | G2 |
| Example 3 | Cellulose | 20 | 1 | 0 | 0 | 1 | Stearic acid | 18 | 10 | Ca | 1.00 | 0.050 | G2 |
| Example 4 | Cellulose | 50 | 1 | 0 | 0 | 1 | Stearic acid | 18 | 10 | Ca | 0.30 | 0.006 | G4 |
| Example 1 | Cellulose | 10 | 1 | 0 | 0 | 1 | Stearic acid | 18 | 10 | Ca | 0.35 | 0.035 | G5 |
| Example 5 | Cellulose | 10 | 1 | 0 | 0 | 1 | Stearic acid | 18 | 10 | Ca | 0.48 | 0.048 | G4 |
| Example 6 | Cellulose | 10 | 1 | 0 | 0 | 1 | Stearic acid | 18 | 10 | Ca | 0.63 | 0.063 | G3 |
| Example 7 | Cellulose | 10 | 0.05 | 0 | 0 | 0.05 | Stearic acid | 18 | 10 | Ca | 0.35 | 0.035 | G3 |
| Example 8 | Cellulose | 10 | 0.1 | 0 | 0 | 0.1 | Stearic acid | 18 | 10 | Ca | 0.35 | 0.035 | G4 |
| Example 9 | Cellulose | 10 | 10 | 0 | 0 | 10 | Stearic acid | 18 | 10 | Ca | 0.35 | 0.035 | G4 |
| Example 10 | Cellulose | 10 | 15 | 0 | 0 | 15 | Stearic acid | 18 | 10 | Ca | 0.35 | 0.035 | G3 |
| Example 11 | Cellulose | 10 | 1 | 0 | 0 | 1 | Stearic acid | 18 | 0.5 | Ca | 0.35 | 0.035 | G3 |
| Example 12 | Cellulose | 10 | 1 | 0 | 0 | 1 | Stearic acid | 18 | 1 | Ca | 0.35 | 0.035 | G4 |
| Example 13 | Cellulose | 10 | 1 | 0 | 0 | 1 | Stearic acid | 18 | 20 | Ca | 0.35 | 0.035 | G4 |
| Example 14 | Cellulose | 10 | 1 | 0 | 0 | 1 | Stearic acid | 18 | 30 | Ca | 0.35 | 0.035 | G3 |
| Example 15 | Cellulose | 10 | 1 | 0 | 0 | 1 | Behenic acid | 22 | 10 | Ca | 0.35 | 0.035 | G4 |
| Example 16 | Cellulose | 10 | 1 | 0 | 0 | 1 | Palmitic acid | 16 | 10 | Ca | 0.35 | 0.035 | G4 |
| Example 17 | Cellulose | 10 | 1 | 0 | 0 | 1 | Lauric acid | 12 | 10 | Ca | 0.35 | 0.035 | G3 |
| Example 18 | Cellulose | 10 | 1 | 0 | 0 | 1 | Stearic acid | 18 | 10 | Zn | 0.35 | 0.035 | G4 |
| Example 19 | Cellulose | 10 | 1 | 0 | 0 | 1 | Stearic acid | 18 | 10 | Mg | 0.35 | 0.035 | G4 |
| Example 20 | Cellulose acetate | 10 | 1 | 0 | 0 | 1 | Stearic acid | 18 | 10 | Ca | 0.35 | 0.035 | G3 |
| Example 21 | Fatty acid polyester | 10 | 1 | 0 | 0 | 1 | Stearic acid | 18 | 10 | Ca | 0.35 | 0.035 | G3 |
| Example 22 | Cellulose | 10 | 0 | 1 | 0 | 1 | Stearic acid | 18 | 10 | Ca | 0.35 | 0.035 | G3 |
| Example 23 | Cellulose | 10 | 0 | 0 | 1 | 1 | Stearic acid | 18 | 10 | Ca | 0.35 | 0.035 | G3 |

The hydrophobic particles and the method for producing hydrophobic particles according to the present disclosure include the following aspects.

### (Supplementary Notes)

(((1))) A method for producing hydrophobic particles, comprising:
   mixing core particles with basic polysaccharides and/or polyamine in an aqueous medium, and forming an intermediate layer by causing the basic polysaccharides and/or the polyamine to adhere to a surface of the core particles to obtain intermediate particles including the core particles and the intermediate layer;
   obtaining an aqueous dispersion containing the intermediate particles and a fatty acid alkali metal salt; and
   mixing the aqueous dispersion with an aqueous solution of an inorganic salt of a metal other than an alkali metal, causing metal soap particles to precipitate on a surface of the intermediate particles to form a metal soap layer, and obtaining hydrophobic particles including the core particles, the intermediate layer, and the metal soap layer.
(((2))) The method for producing hydrophobic particles according to (((1))),
   wherein in a case where a volume-based median diameter of the core particles is set as A µm and a volume-based median diameter of the metal soap particles is set as B µm, a value of B/A is 0.005 or more and less than 0.08.
(((3))) The method for producing hydrophobic particles according to (((1))) or (((2))),
   wherein a volume-based median diameter of the metal soap particles is 0.1 µm or more and less than 1 µm.
(((4))) The method for producing hydrophobic particles according to any one of (((1))) to (3),
   wherein the core particles include at least one selected from the group consisting of cellulose particles, cellulose acetate particles, and fatty acid polyester particles.
(((5))) The method for producing hydrophobic particles according to any one of (((1))) to (((4))),
   wherein the basic polysaccharides include water-soluble chitosan.
(((6))) The method for producing hydrophobic particles according to any one of (((1))) to (((5))),
   wherein the polyamine includes polyethyleneimine and/or polyallylamine.
(((7))) The method for producing hydrophobic particles according to any one of (((1))) to (((6))),
   wherein in obtaining the intermediate particles, a total amount of the basic polysaccharides and the polyamine is 0.1% by mass or more and 10% by mass or less with respect to an amount of the core particles.
(((8))) The method for producing hydrophobic particles according to any one of (((1))) to (((7))),
   wherein a number of carbon atoms of a fatty acid in the fatty acid alkali metal salt is 12 or more and 22 or less.
(((9))) The method for producing hydrophobic particles according to any one of (((1))) to (((8))),
   wherein in obtaining the aqueous dispersion, an amount of a fatty acid in the fatty acid alkali metal salt is 1% by mass or more and 20% by mass or less with respect to an amount of the core particles.
(((10))) The method for producing hydrophobic particles according to any one of (((1))) to (((9))),
   wherein the metal other than the alkali metal includes at least one selected from the group consisting of calcium, zinc, and magnesium.
(((11))) Hydrophobic particles including core particles, an intermediate layer, and a metal soap layer,
   wherein the intermediate layer contains basic polysaccharides and/or polyamine,
   the metal soap layer contains metal soap particles, and
   in a case where a volume-based median diameter of the core particles is set as A µm and a volume-based median diameter of the metal soap particles is set as B µm, a value of B/A is 0.005 or more and less than 0.08.
(((12))) Hydrophobic particles including core particles, an intermediate layer, and a metal soap layer,
   wherein the intermediate layer contains basic polysaccharides and/or polyamine,
   the metal soap layer contains metal soap particles, and
   a volume-based median diameter of the metal soap particles is 0.1 µm or more and less than 1 µm.

According to (((1))), (((4))), (((5))), (((6))), (((8))), or (((10))), hydrophobic particles having excellent water repellency can be obtained as compared with a production method in which the intermediate layer is not formed.

According to (((2))), hydrophobic particles having excellent water repellency can be obtained as compared with a production method in which the value of B/A is 0.08 or more.

According to (((3))), hydrophobic particles having excellent water repellency can be obtained as compared with a production method in which the volume-based median diameter of the metal soap particles is less than 0.1 µm or 1 µm or more.

According to (((7))), hydrophobic particles having excellent water repellency can be obtained as compared with a production method in which the total amount of the basic polysaccharides and the polyamine is less than 0.1% by mass or more than 10% by mass with respect to the amount of the core particles.

According to (((9))), hydrophobic particles having excellent water repellency can be obtained as compared with a production method in which the amount of the fatty acid in the fatty acid alkali metal salt is less than 1% by mass or more than 20% by mass with respect to the amount of the core particles.

The hydrophobic particles of (((11))) are more excellent in water repellency as compared with hydrophobic particles in which the value of B/A is 0.08 or more.

The hydrophobic particles of (((12))) are more excellent in water repellency as compared with hydrophobic particles in which the volume-based median diameter of the metal soap particles is less than 0.1 µm or 1 µm or more.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A method for producing hydrophobic particles, comprising:
mixing core particles with basic polysaccharides and/or polyamine in an aqueous medium, and forming an intermediate layer by causing the basic polysaccharides and/or the polyamine to adhere to a surface of the core particles to obtain intermediate particles including the core particles and the intermediate layer;
obtaining an aqueous dispersion containing the intermediate particles and a fatty acid alkali metal salt; and
mixing the aqueous dispersion with an aqueous solution of an inorganic salt of a metal other than an alkali metal, causing metal soap particles to precipitate on a surface of the intermediate particles to form a metal soap layer, and obtaining hydrophobic particles including the core particles, the intermediate layer, and the metal soap layer.

2. The method for producing hydrophobic particles according to claim 1,
wherein in a case where a volume-based median diameter of the core particles is set as A µm and a volume-based median diameter of the metal soap particles is set as B µm, a value of B/A is 0.005 or more and less than 0.08.

3. The method for producing hydrophobic particles according to claim 1 or 2, wherein a volume-based median diameter of the metal soap particles is 0.1 µm or more and less than 1 µm.

4. The method for producing hydrophobic particles according to any one of claims 1 to 3,
wherein the core particles include at least one selected from the group consisting of cellulose particles, cellulose acetate particles, and fatty acid polyester particles.

5. The method for producing hydrophobic particles according to any one of claims 1 to 4,
wherein the basic polysaccharides include water-soluble chitosan.

6. The method for producing hydrophobic particles according to any one of claims 1 to 5,
wherein the polyamine includes polyethyleneimine and/or polyallylamine.

7. The method for producing hydrophobic particles according to any one of claims 1 to 6,
wherein in obtaining the intermediate particles, a total amount of the basic polysaccharides and the polyamine is 0.1% by mass or more and 10% by mass or less with respect to an amount of the core particles.

8. The method for producing hydrophobic particles according to any one of claim 1 to 7,
wherein a number of carbon atoms of a fatty acid in the fatty acid alkali metal salt is 12 or more and 22 or less.

9. The method for producing hydrophobic particles according to any one of claims 1 to 8,
wherein in obtaining the aqueous dispersion, an amount of a fatty acid in the fatty acid alkali metal salt is 1% by mass or more and 20% by mass or less with respect to an amount of the core particles.

10. The method for producing hydrophobic particles according to any one of claims 1 to 9,
wherein the metal other than the alkali metal includes at least one selected from the group consisting of calcium, zinc, and magnesium.

11. Hydrophobic particles including core particles, an intermediate layer, and a metal soap layer,
wherein the intermediate layer contains basic polysaccharides and/or polyamine,
the metal soap layer contains metal soap particles, and
in a case where a volume-based median diameter of the core particles is set as A µm and a volume-based median diameter of the metal soap particles is set as B µm, a value of B/A is 0.005 or more and less than 0.08.

12. Hydrophobic particles including core particles, an intermediate layer, and a metal soap layer,
wherein the intermediate layer contains basic polysaccharides and/or polyamine,
the metal soap layer contains metal soap particles, and
a volume-based median diameter of the metal soap particles is 0.1 µm or more and less than 1 µm.
